# EUROPEAN PATENT SPECIFICATION

(11) **EP 3 486 996 B1**
(45) Date of publication and mention of the grant of the patent: **01.09.2021**
(21) Application number: 17425132.2
(22) Date of filing: 20.11.2017
(51) Int. Cl.: H01Q 1/02, H01Q 1/42, H01Q 1/32, G01S 13/91, B61L 23/04, B61L 29/30, G01S 13/931, G01S 7/40

(54) **RADOME WITH WIPING MECHANISM**
RADOM MIT WISCHMECHANISMUS
RADÔME DOTÈ D' UN MÉCANISME À ESSUYAGE

(43) Date of publication of application: 22.05.2019
(73) Proprietor: Progress Rail Inspection & Information Systems S.r.l., 40134 Bologna (IT)
(72) Inventor: Corrieri, Roberto, 51100 Pistoia (IT); Bossio, Lorenzo, 50134 Firenze (IT); Beni, Samuele, Arezzo (IT); Tili, Marco, 59021 Vaiano (PO) (IT)
(74) Representative: Harris, Oliver John Richard

(56) References cited:
- JP-A- 2005 291 808
- JP-A- 2012 237 724

## Description

### Technical Field

This disclosure relates to mechanisms for clearing rain water from a radome.

In this specification, a radome means a cover or enclosure for a radar antenna, of which at least a portion is transparent to the electromagnetic signal received by the antenna. A radome may be of any shape to suit the field of view of the antenna. The electromagnetically transparent portion may define for example a generally two-dimensional window in the cover or enclosure.

### Background

A radar antenna is commonly arranged within a radome to protect the antenna from the weather. Particularly for radar antennas operating at frequencies at or above 30GHz, the choice of material and material thickness for the transparent portion of the radome is severely constrained, and will often be a thin sheet material supported on a frame. The material thickness may be selected for example to be half of the wavelength of the operating frequency of the antenna. Suitable sheet materials may include laminated, woven and composite materials including various fabrics, fibreglass, and films of PTFE and other plastics.

Rain falling on the external surface of a radome can severely degrade the performance of an antenna operating at frequencies of about 30GHz or more, wherein the drops or film of water remaining on the transparent portion of the radome may attenuate the signal by as much as 10-15dB.

In order to maintain performance in wet weather, it is known to provide a moving wiper blade to sweep water from the transparent portion of the radome.

One problem with such arrangements is that the thin radome material tends to deform over time so that the radome surface is no longer flat. This can cause the wiper blade to lose contact with a part of the swept area, so that the signal is attenuated by the water film remaining on the deformed region of the radome material. Severe deformation may interrupt the movement of the wiper blade. If the wiper blade fails to move back to its parked position then it may obstruct the transparent window of the radome and block the signal to the antenna over at least a portion of its field of view.

In an alternative approach, a blower may be arranged to provide a warm air flow to dry rainwater from the external surface of the radome. Such arrangements however are found to have very limited effectiveness.

JP2005 291808 A discloses a 360° scanning radar mounted on a vehicle and including a wiper.

### Summary

In accordance with various aspects of the present disclosure there are provided a radome, and a method of wiping water from a radome, as defined in the claims.

In a preferred embodiment and in a use position of the antenna, the radome includes a barrier, an actuator means, and at least one wiper. The barrier defines at least first and second electromagnetically transmissive window portions. The actuator means is arranged to move the barrier relative to the antenna and the at least one wiper between a first position in which signals may pass through the first window portion of the barrier to the antenna, and a second position in which signals may pass through the second window portion of the barrier to the antenna. The at least one wiper is arranged in contact with an external surface of the barrier to wipe the external surface of the barrier to remove water from a respective one or both of the window portions as the barrier moves relative to the antenna and the at least one wiper between the first and second positions.

A corresponding method of use includes wiping the external surface of the barrier with the at least one wiper while moving the barrier relative to the antenna and the at least one wiper between the first and second positions.

### Brief Description of the Drawings

Further features and advantages will be apparent from the following illustrative embodiment which will now be described, purely by way of example and without limitation to the scope of the claims, and with reference to the accompanying drawings, in which:
Fig. 1 shows two radomes containing radar antennas which are arranged to monitor a level crossing at the intersection of a roadway and a railway;
Figs. 2 and 3 are respectively a side view and a plan view of one of the radomes of Fig. 1;
Fig. 4 is a front, exterior view of the front housing of the radome;
Figs. 5 is a rear, interior view of the front housing of the radome before installation of a window assembly;
Fig. 6 is the same view as Fig. 5 after installation of a wiper unit of the window assembly;
Figs. 7 and 8 are respectively a rear view and a side view of a window unit of the window assembly;
Fig. 9 is a section through the window unit taken at IX - IX of Fig. 7;
Fig. 10 is a top view of the window unit;
Fig. 11 is a section through the window unit taken at XI - XI of Fig. 7;
Figs. 12 and 13 are respectively a rear view and a top view of the wiper unit;
Fig. 14 is a section through the wiper unit taken at XIV - XIV of Fig. 12;
Fig. 15 is a section through a fixed frame of the window assembly taken at XV - XV of Fig. 17;
Fig. 16 is a section through the window assembly taken at XVI - XVI of Fig. 20, showing the window unit, wiper unit and fixed frame in the sectional views of Figs. 11, 14 and 15 in the assembled condition;
Figs. 17 and 18 are respectively a rear view and a top view of the fixed frame;
Fig. 19 is the same view as Fig. 6 after installation of the fixed frame to retain the wiper unit, but without the window unit;
Figs. 20 and 21 show the complete window assembly including the window unit in the same view as Fig. 19, respectively in the first position (Fig. 20) and the second position (Fig. 21);
Figs. 22 is a section through the complete window assembly, taken in the first position at XXII - XXII of Fig. 20;
Fig. 23 is a section through the complete window assembly, taken in the second position at XXIII - XXIII of Fig. 21;
Figs. 24 and 25 are enlarged views of the housing aperture region of Figs. 22 and 23, respectively; and
Fig. 26 illustrates a method of operation.

Reference numerals appearing in more than one of the figures indicate the same or corresponding parts in each of them.

### Detailed Description

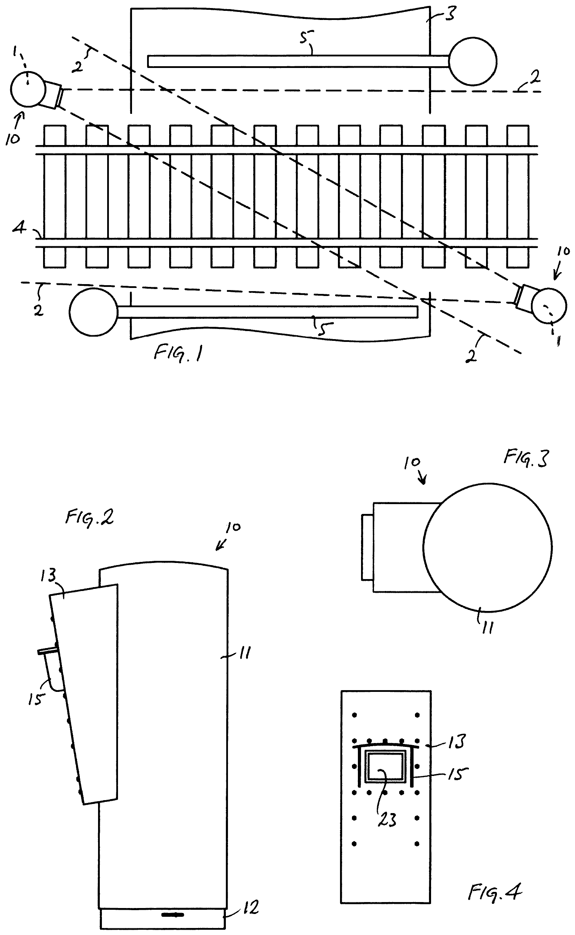

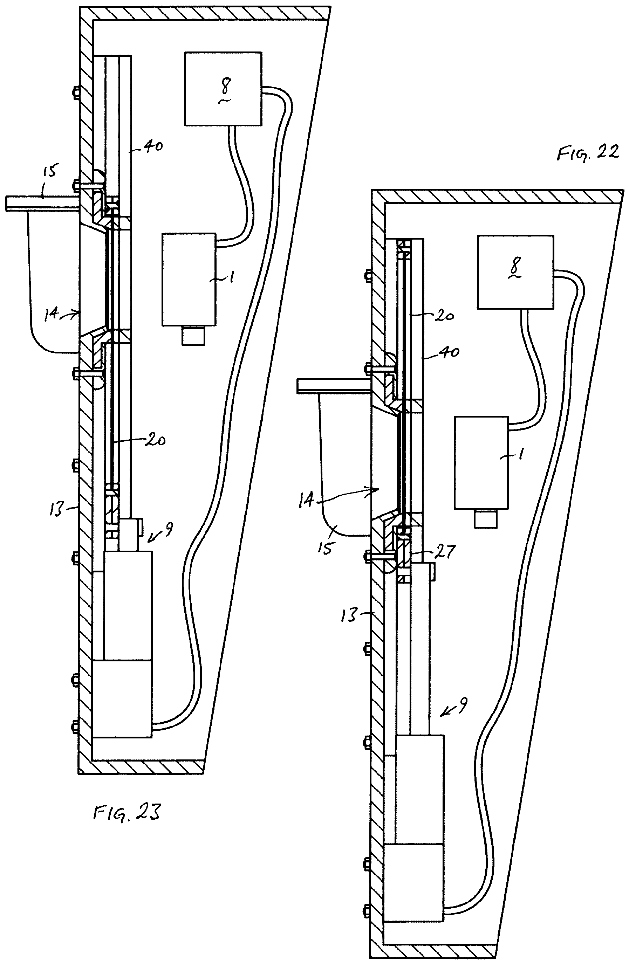

Referring to Figs. 1-4 and Figs. 22 - 23, a pair of radar antennas 1 are mounted, each in a use position within a respective radome 10 which defines a barrier assembly 11, 13, 25 having fixed and moveable parts which together protect the antenna from the weather. The barrier assembly comprises a fixed barrier including a body 11 mounted on a base 12 and having a front housing 13 with an aperture 14 protected by an external cowling 15. The field of view of the antenna 1 is defined by the electromagnetic waves or signals 2 which are sent from and received by the antenna via the aperture 14. The barrier assembly further comprises a moveable barrier formed as a panel 25. The aperture 14 is closed by a window portion 21, 22 of the panel 25. The panel 25 is electromagnetically transmissive, which is to say, transparent to the electromagnetic waves or signals 2, and forms part of a window unit 20 as further described below. In the illustrated example, the body 11 and front housing 13 forming the rest of the barrier assembly 11, 13, 25 are electromagnetically opaque.

In the illustrated arrangement, each radome 10 is arranged and adjusted, e.g. in rotation on its base to a fixed use position. In this position the field of view of each antenna (which is to say, the area outside the radome which can receive signals from the antenna and return signals to the antenna), represented in Fig. 1 by the divergent dotted lines indicating the signals 2 at the boundaries of the field of view, covers a portion of a level crossing where a roadway 3 intersects a railway 4. Barrier arms 5 are arranged to prevent traffic on the roadway from crossing the railway when a train approaches.

The window portion 21, 22 of each radome 10 is arranged so that signals may pass through it to and from the respective antenna 1. In the illustrated example, the antenna receives signals 2 returned from a fixed target, comprising in toto all the fixed elements of the environment such as the railway 4 as illustrated within its field of view. As illustrated, the opposite radome 10 may form part of the fixed target, or alternatively each radome may be arranged so that the opposite radome is not included in the field of view.

Each antenna 1 may operate at a frequency of about 30GHz or more, for example, in the range from about 30GHz to about 110 GHz. The signals 2 sent from and received by each antenna 1 are processed by a radar control system 8 which may be connected to an internal and/or external electrical power supply (not shown). The control system senses changes in the signals using signal processing techniques as well known in the art to determine, inter alia, whether the fixed environment has changed, indicating the presence of an obstruction on the railway, and whether the signals have become attenuated indicating the presence of a water film or drops of water on the external surface 23 of the window portion 21, 22 of the barrier. If the control system 8 determines that an obstruction is present, an alarm signal may be sent via a suitable communications link (not shown) to stop the train. If the control system determines that water is present, it may operate an actuator 9 to wipe the external surface 23 of the panel 25 with at least one wiper. The actuator 9 is illustrated as a linear actuator with a reciprocating drive rod, but could be a crank, a rack and pinion, or any other suitable mechanism.

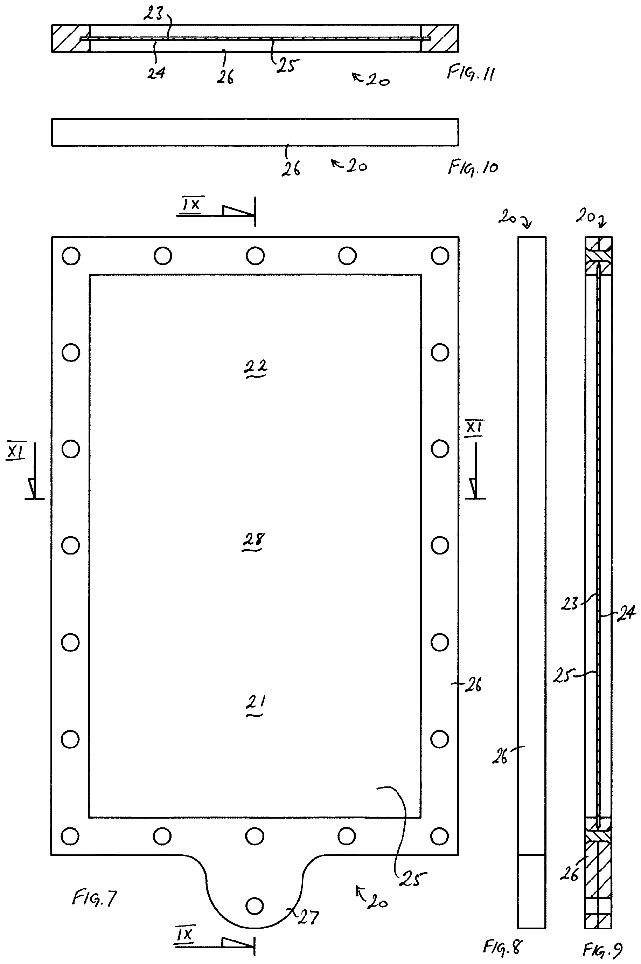

Referring to Figs. 7-11, the window unit 20 comprises a frame 26 having a connector portion 27 by which it is connected to the actuator 9. The window portion of the barrier comprises the thin panel 25 of electromagnetically transmissive material as known in the art, which is fixedly supported in the frame 26. The panel 25 may have a thickness between its opposite, external surface 23 and internal surface 24 approximately equal to half of the wavelength of the operating frequency of the antenna. The panel 25 could be a solid sheet, a fabric or a laminated or composite material. It may be made from or coated with, for example, PTFE or other suitable plastics material. The frame 26 holds the panel 25 all around its edge to support it and keep it flat in use. The panel 25 may be clamped or bonded to the frame 26 all around its edge so that the frame exerts a tension force on the leading edge of the panel as it moves, helping to pull the panel between the wipers 31, 32 and the supports 47 as further explained below.

The entire panel 25 exposed within the frame 26 may be electromagnetically transmissive, including its lower part which defines the first, lower window portion 21, its upper part which defines the second, upper window portion 22, and its intermediate region 28 which extends contiguously between the first and second window portions and lies behind the upper wiper 32 in the first position of the window unit as further explained below, so that no parts of the panel 25 between the first and second window portions are electromagnetically opaque.

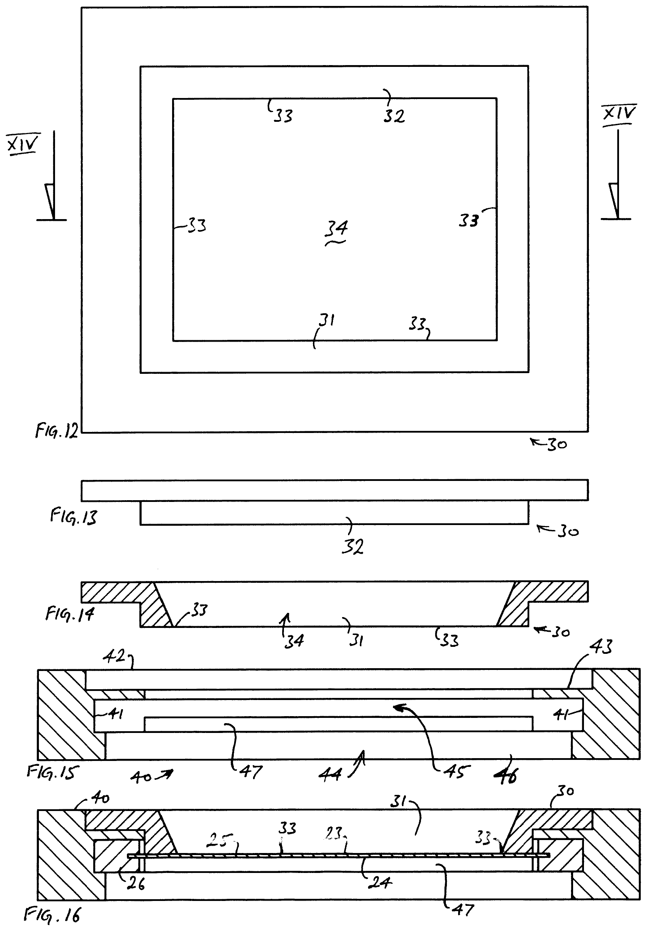

Referring to Figs. 12 -14, in the illustrated example, the at least one wiper comprises a first, lower wiper 31 and the second, upper wiper 32 which form the respective lower and upper sides of a wiper unit 30, formed as a frame whose inward edges 33 define a central aperture 34. The wipers may be formed from a rubber or plastics material, and could be moulded or extruded, for example, in neoprene or another suitable elastomer.

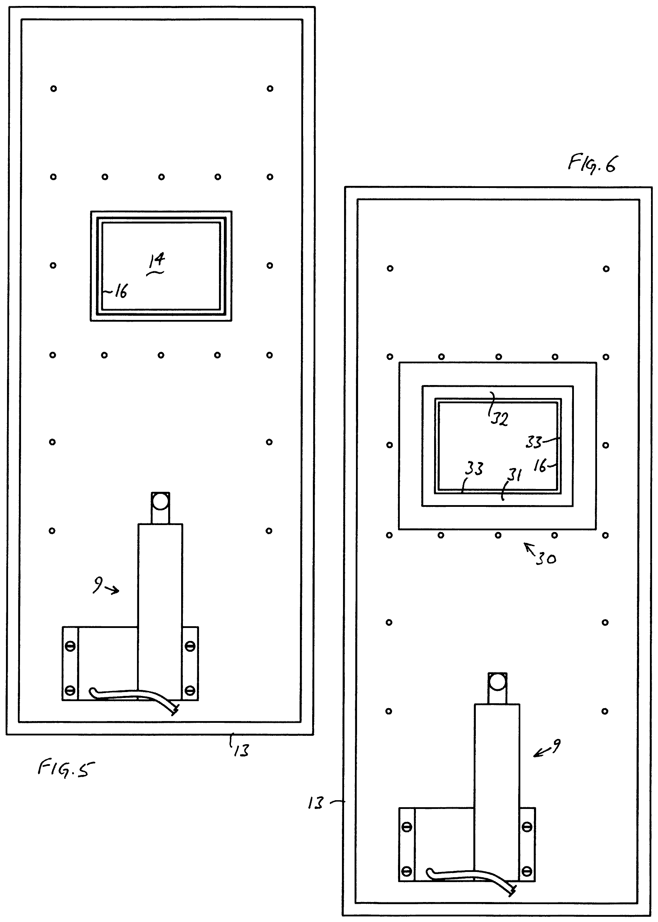

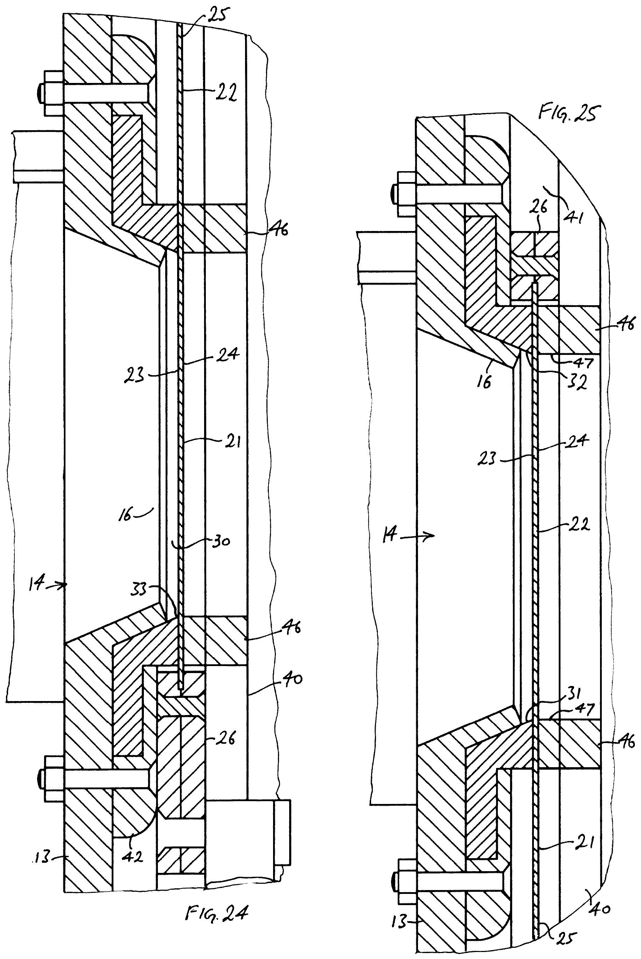

Referring also to Figs. 5, 6, and 22 - 25, the aperture 14 of the front housing 13 is surrounded by an inwardly facing lip 16. The wiper unit is arranged around the aperture 14 so that the lip 16 extends into the aperture 34 as shown in Fig. 6, and retained in that position by a fixed frame 40. In use, the wiper unit forms a seal between the front housing 13 and the panel 25 all round the aperture 14 of the front housing.

Referring to Figs. 15, 17 and 18, the fixed frame 40 defines grooves or slideways 41. On the forwardly facing side of the slideways is a rectangular frame portion 42 defining a recess 43 surrounding an aperture 44 which is open through the front and rear sides of the fixed frame. The aperture 44 intersects the window unit receiving space 45 bounded by the slideways 41 which opens through the top and bottom ends of the fixed frame, so that the respective window portions 21, 22 of the window unit 20 are exposed in the aperture 44 as the window unit slides along the length axis of the fixed frame.

On the rearwardly facing side of the slideways are two fixed bars 46, each bar 46 having a support 47 which extends into the window unit receiving space 45 in contact with the internal surface 24 of the panel 25. The supports may be made from or coated with a material providing a low coefficient of friction, e.g. a felt material or a plastics material such as PTFE, or may be arranged as rollers or the like, so that they press against the internal surface 24 of the window portions 21, 22 of the panel 25, optionally also providing a wiping or cleaning action, as the window unit 20 slides past the supports 47 in use.

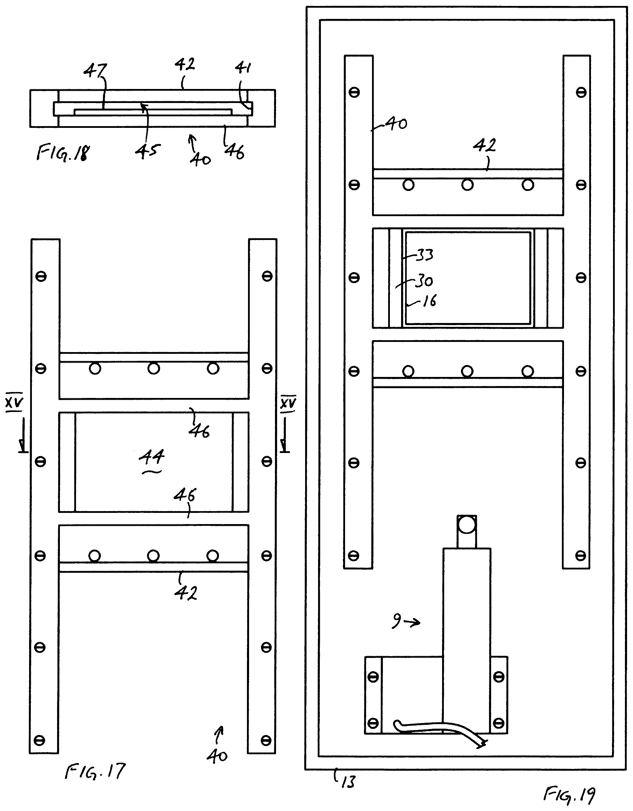

Fig. 19 shows how the fixed frame 40 is fixed to the front housing 13 to retain the wiper unit 30 in the recess 43 so that its inward edges 33 extend into the window unit receiving space 45 where they are exposed between the rectangular frame portion 42 and the lip 16 of the front housing. For clarity, the window unit is not shown in Fig. 19; in practice however, the window unit 20 is arranged in the window unit receiving space 45 with its long edges in the slideways 41 before the fixed frame 40 is installed in the front housing 13 as shown.

Referring to Fig. 16 and Figs. 20 - 25, once fully assembled, each wiper 31, 32 is arranged in contact with the external surface 23 of the panel 25 which forms part of the barrier assembly protecting the antenna 1 from the weather.

In the assembled position it can be seen that the first and second wipers 31, 32 define opposite, lower and upper sides of a fixed frame formed by the inwardly facing lip 16 of the front housing 13 and the inward edges 33 of the wiper unit 30, with the panel 25 together with the moveable frame 26 of the window unit 20 being slidable up and down relative to the fixed frame 16, 33. The panel 25 is received in compression between each wiper 31, 32 and its respective support 47 which is arranged in opposed relation to the wiper, so that the external surface 23 of the panel 25 is pressingly engaged against the inward edge 33 of the wiper 31, 32 as the window unit 20 moves between the first and second positions, the panel 25 sliding between each wiper 31, 32 and its respective support 47.

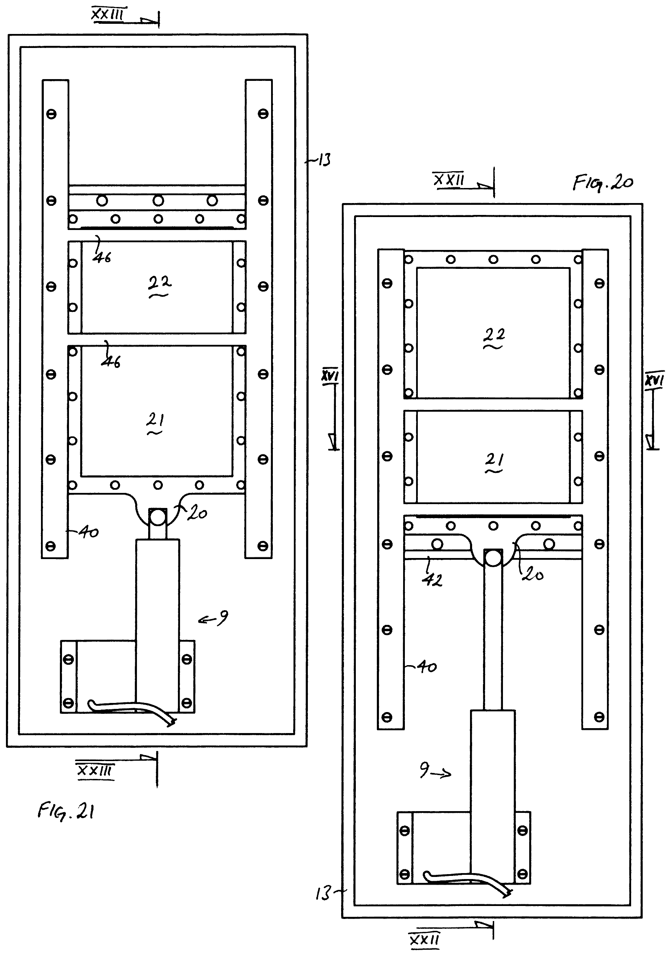

The actuator 9 and radar control system 8 together form an actuator means for wiping the external surface 23 of the barrier with the wipers 31, 32 to remove water from the window portions 21, 22. The actuator means 8,9 is arranged to move the window unit 20 including the frame 26 and the panel 25 which forms part of the barrier assembly, in sliding translation relative to the antenna 1 and the wipers 31, 32, between the first (upward) position as shown in Figs. 20, 22 and 24, in which signals may pass through the first window portion 21 of the panel 25 to the antenna 1, and the second (downward) position as shown in Figs. 21, 23 and 25, in which signals may pass through the second window portion 22 of the panel 25 to the antenna 1.

The wipers 31, 32 are arranged to wipe the external surface 23 of the panel 25 forming the moveable barrier as the panel 25 moves relative to the antenna 1 and the wipers 31, 32 between the first and second positions, the first, lower wiper 31 being arranged to wipe water from the first, lower window portion 21 when the panel 25 is moved from the first position to the second position, the second, upper wiper 32 being arranged to wipe water from the second, upper window portion 22 when the panel 25 is moved from the second position back to the first position.

Referring to Fig. 2, it can be seen that the front housing 13 including the window unit 20, wiper unit 30 and fixed frame 40 may be inclined somewhat forwardly and downwardly in its use position. This helps to keep rain off the exposed external surface of the window portion 21 or 22. As shown, despite the slight downward inclination, the panel 25 may be arranged as shown to move generally downwardly from the first position to the second position, and upwardly from the second position to the first position, wherein "upwardly" and "downwardly" are construed to mean a vector having at least a vertical component, preferably a major vertical component.

As illustrated, the radome may be arranged to enclose the external and internal surfaces 23, 24 of the second window portion 22 in the first position of the window unit 20, and optionally also to enclose the external and internal surfaces 23, 24 of the first window portion 21 in the second position of the window unit 20. Thus, the window unit 20 may be parked in a first, default or rest position with the first, lower window portion 21 exposed, while the second, upper window portion is enclosed and protected within the front housing 13 as shown in Figs. 20, 22 and 24. The default or rest position may be an upward position as shown, so that even if the lower wiper 31 becomes worn, the upper, second window portion 22 will remain dry in rainy weather.

In its upward or first position, rain will tend to run down the first window portion 21 to the inward edge 33 of the lower wiper 31. As the panel 25 moves to the second (downward) position), water remaining on the first window portion 21 will be wiped off by the lower wiper 31, so that the first window portion is dried as it moves inside the front housing 13.

As the panel moves back to the first (upward) position, any rain that has accumulated on the second, upper window portion 22 is wiped off by the upper wiper 32, so that the second window portion 22 is dried as it moves back inside the front housing 13.

The control system may be arranged to operate the antenna in a detection cycle during which one or more signals 2 are received by the antenna 1 via the respective first or second window portion 21, 22 of the panel 25 to sense changes in its field of view. The detection cycle may be repeated regularly or triggered by an external event.

The actuator means 8, 9 may be arranged to move the window unit 20 from the first position to the second position prior to commencement of a detection cycle, which takes place in the second position of the window unit 20, and to return the barrier from the second position to the first position responsive to completion of the detection cycle.

The actuator means 8, 9 may be arranged to move the window unit 20 from the first position to the second position responsive to a sensed attenuation of signals 2 received by the antenna 1 via the first window portion 21 of the barrier. If the signals 2 received via the first window portion 21 are not attenuated by water drops or a water film on the external surface 23 of the first window portion 21, then the window unit 20 may remain in the first (upward) position while the detection cycle takes place.

For example, the control system 8 may be arranged to determine an attenuation or a degree of attenuation of signals 2 received by the antenna 1 via the first window portion 21 of the barrier in the first position, prior to commencing a detection cycle.

The control system 8 may determine whether a second, later signal is attenuated relative to a first, earlier signal, and optionally whether the degree of attenuation of the second signal relative to the first signal is greater than a predefined threshold value, which may be set during installation or reset regularly, for example, every time the window unit 20 moves back to its parked, first position. If the second, later signal is determined to be attenuated relative to the first, earlier signal, or if the degree of attenuation is determined to be greater than the threshold value, then the control system 8 may operate the actuator 9 to move the window unit 20 from the first position to the second position prior to commencement of the detection cycle, and then to return the window unit 20 from the second position to the first, parked position responsive to completion of the detection cycle.

If the second, later signal is determined not to be attenuated relative to the first, earlier signal, or if the degree of attenuation is determined to be less than the threshold value, then the control system 8 may be arranged not to move the window unit prior to commencement of the detection cycle, so that the signal 2 is received via the first window portion 21 during the detection cycle.

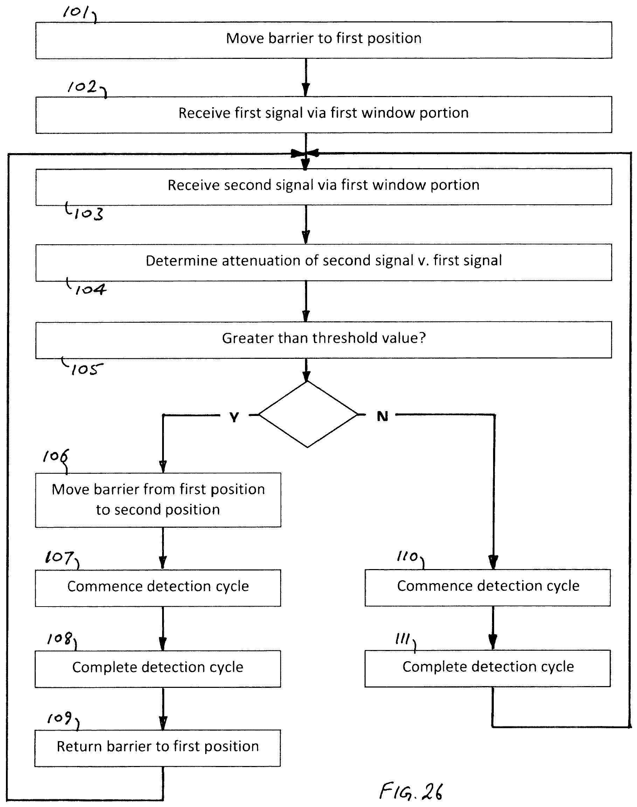

Fig. 26 shows how the barrier may be moved to the first position (step 101) before receiving at least a first signal 2 returned from the fixed target via the first window portion 21 (step 102). At some later time, a second signal 2 is returned from the same fixed target and received via the first window portion 21 (step 103).

The control system 8 determines at step 104 a degree of attenuation of the second signal relative to the first signal, and at step 105 determines whether the degree of attenuation is greater than a threshold value.

At step 106, responsive to determining that the degree of attenuation is greater than the threshold value, the control system 8 commands the actuator 9 to move the window unit 20 from the first position to the second position; and then at step 107 commences a detection cycle of the antenna during which a further signal or signals 2 are returned from the target and received via the second window portion 22, which remains dry because it was protected inside the front housing 13 until moved into position just before commencing the detection cycle. The detection cycle is completed at step 108 before returning the window unit 20 at step 109 from the second position to the first position.

If the degree of attenuation is not greater than the threshold value, then the window unit 20 remains in the first position while the detection cycle is commenced (step 110) and completed (step 111).

The threshold value may be updated by signals received, either during or after a detection cycle, optionally after returning the window unit 20 to the first position. The sequence is then repeated to determine whether each subsequent detection cycle occurs in the first or second position of the window unit 20.

### Industrial Applicability

The novel radome may be used to provide more reliable and effective operation during rainy weather, particularly for a radar antenna operating at a frequency of about 30GHz or above. The mechanical wiping action is more effective than prior art arrangements which rely on warm air to dry the external surface of a radome. The barrier may be arranged to move rapidly between the first and second positions, providing a fast and effective wiping action which does not interrupt the iterative detection cycle of the radar.

By arranging a support in contact with the internal surface of the barrier and in opposed relation to the wiper, it is possible to ensure that the entire external surface of the barrier is pressingly engaged against the wiper as the barrier moves between the first and second positions. Thus, even when the barrier material is very thin, and even in the event that it should become deformed over time, an effective wiping action is obtained.

Since the or each wiper remains outside the field of view of the radar throughout the wiping operation, and conveniently may be fixed in a static position relative to the antenna, there is no risk that a wiper may fail in a position where it partially obstructs the field of view of the radar, even in the event that the thin material of the barrier should deform over time.

Moreover, by arranging the intermediate region of the barrier which extends between the first and second window portions to be electromagnetically transmissive, so that there are no non-transmissive regions of the barrier between the first and second window portions, it is possible to ensure that signals may pass through the barrier to the antenna when the barrier is in any intermediate position between the first and second positions. Thus, in the event of failure of the actuator means, the radar may continue to operate even though the wiping mechanism is disabled.

In applications where the radar is arranged to view a fixed target, the service life of the barrier and wiping mechanism may be extended by arranging for the mechanism to operate responsive to a sensed attenuation of the signal received from the fixed target. Thus, when there is little or no attenuation of the signal returned from the fixed target is sensed, the wiping action may be suspended so that the barrier remains in the first position. In practice, wiping may be required only occasionally, so there is little wear of the thin material of the barrier, increasing the service life of the assembly.

The improved reliability of the wiping mechanism, longer service life and and reduced likelihood of obstruction of the radar antenna provides a better solution for safety critical applications, particularly in a fixed position, for example, in monitoring obstructions on a level crossing at the intersection of a roadway and a railway.

In summary, a radar antenna is protected by a radome including a barrier, which may be formed as a panel and is moveable between first and second positions in which the antenna may receive signals via respective first and second window portions of the barrier. One or more wipers are arranged to wipe water from an external surface of the barrier as it moves between the first and second positions. The barrier may be moveable responsive to a determination of the degree of attenuation of the sgnals by water on the external surface of the respective window portion.

The antenna 1 may be of any conventional design and is not shown in detail. The radar control system 8 may include a processor, memory, and other conventional elements as known in the art.

In alternative embodiments more than two window portions might be provided, with the barrier being movable continuously or stepwise between multiple different positions. The constructional details of the assembly components could be other than as shown. For example, an assembly of separate components could be used instead of the fixed frame to retain the wipers and the window unit. Only one wiper or more than two wipers might be provided. The wiper or wipers need not form part of a frame; the or each wiper could be for example an extruded strip. The barrier might be movable in rotation rather than, as illustrated, in translation. It could move horizontally rather than vertically.

Conveniently, as in the illustrated embodiment, the or each wiper may be arranged in a fixed position relative to the antenna, optionally also relative to the fixed parts of the barrier assembly forming the fixed structure of the radome, so that it remains in its fixed position relative to the antenna as the barrier moves relative to the wiper(s) and antenna between the first and second positions.

Alternatively however, the or each wiper could be movable relative to the antenna, optionally also relative to the fixed parts of the barrier assembly forming the fixed structure of the radome, as the barrier moves relative to the antenna and the or each wiper.

The barrier could be arranged to move, for example on a timed schedule or responsive to any desired sensor input, other than in response to a sensed attenuation of the signal received by the radar antenna.

Although conveniently, as in the illustrated example, the barrier formed by the panel 25 is moveable in a static position of the antenna 1 and wipers 31, 32, it will be appreciated that the movement of the barrier relative to the antenna and the at least one wiper could alternatively be provided by moving the antenna and the at least one wiper in a static position of the barrier.

Many further possible adaptations within the scope of the claims will be evident to those skilled in the art.

In the claims, reference numerals and characters in parentheses are provided for ease of reference and should not be construed as limiting features.

## Claims

1. A radome (10) for a radar antenna (1), the radome including in a use position of the antenna:
a barrier (25), the barrier being arranged so that signals (2) may pass through an electromagnetically transmissive window portion (21, 22) of the barrier to the antenna,
at least one wiper (31, 32) arranged in contact with an external surface (23) of the barrier, and
an actuator means (8, 9) for wiping the external surface of the barrier with the at least one wiper to remove water from the window portion; wherein
the barrier defines at least a first said electromagnetically transmissive window portion (21) and a second said electromagnetically transmissive window portion (22); and **characterised in that**
the actuator means (8, 9) is arranged to move the barrier (25) relative to the antenna (1) and the at least one wiper (31, 32) between a first position in which signals may pass through the first window portion (21) of the barrier to the antenna, and a second position in which signals may pass through the second window portion (22) of the barrier to the antenna;
the at least one wiper being arranged to wipe the external surface of the barrier as the barrier moves relative to the antenna and the at least one wiper between the first and second positions.

2. A radome according to claim 1, wherein the radome is arranged to enclose the second window portion (22) of the barrier in the first position of the barrier.

3. A radome according to claim 2, wherein the radome is arranged to enclose the first window portion (21) of the barrier in the second position of the barrier.

4. A radome according to claim 1, wherein at least one support (47) is arranged in contact with an internal surface (24) of the barrier (25) opposite the external surface (23), and the barrier is slidable between the at least one wiper (31, 32) and the at least one support (47).

5. A radome according to claim 1, wherein a first said wiper (31) and a second said wiper (32) are provided, the first wiper (31) being arranged to wipe water from the first window portion (21) when the barrier is moved from the first position to the second position, the second wiper (32) being arranged to wipe water from the second window portion (22) when the barrier is moved from the second position to the first position.

6. A radome according to claim 5, wherein the first and second wipers (31, 32) define opposite, upper and lower sides of a fixed frame, and the barrier (25) comprises a panel which is slidable up and down relative to the fixed frame.

7. A radome according to claim 1, wherein the actuator means (8, 9) includes a radar control system (8), and is arranged to move the barrier relative to the antenna and the at least one wiper from the first position to the second position responsive to sensing, by the radar control system (8), an attenuation of signals received by the antenna via the first window portion (21) of the barrier.

8. A radome according to claim 1, wherein the actuator means (8, 9) includes a radar control system (8), the radar control system (8) being arranged to operate the antenna (1) in a detection cycle; and the actuator means (8, 9) is arranged to move the barrier relative to the antenna and the at least one wiper from the first position to the second position prior to commencement of the detection cycle of the antenna, and to return the barrier from the second position to the first position responsive to completion of the detection cycle;
the detection cycle including at least receiving a signal by the antenna via the second window portion (22) of the barrier.

9. A radome according to claim 1, wherein the actuator means (8, 9) includes a radar control system (8), the radar control system (8) being arranged to operate the antenna (1) in a detection cycle, and to determine an attenuation of signals received by the antenna via the first window portion (21) of the barrier in the first position of the barrier prior to commencing the detection cycle of the antenna; and the actuator means (8, 9) is arranged:
responsive to determining that a respective, later one of the signals is attenuated relative to an earlier one of the signals,
to move the barrier relative to the antenna and the at least one wiper from the first position to the second position prior to commencement of the detection cycle, and then
to return the barrier from the second position to the first position responsive to completion of the detection cycle; and,
responsive to determining that the respective, later one of the signals is not attenuated relative to the earlier one of the signals, not to move the barrier relative to the antenna and the at least one wiper from the first position to the second position prior to commencement of the detection cycle;
the detection cycle including at least receiving a signal by the antenna via the barrier (25).

10. A radome according to claim 1, wherein the barrier is arranged to move downwardly from the first position to-the second position, and upwardly from the second position to the first position.

11. A radome according to claim 1, wherein the barrier (25) comprises a panel supported in a moveable frame (26), and the actuator means is arranged to move the frame and the panel together relative to the antenna and the at least one wiper between the first and second positions.

12. A radome according to claim 1, wherein an intermediate region (28) of the barrier between the first (21) and second (22) window portions is electromagnetically transmissive, and the barrier is arranged so that signals may pass through the barrier to the antenna when the barrier is in any intermediate position between the first and second positions.

13. A method of wiping water from a radome (10) for a radar antenna (1), including:
arranging a barrier (25) of the radome so that signals (2) may pass through an electromagnetically transmissive window portion (21, 22) of the barrier to the antenna;
arranging at least one wiper (31, 32) in contact with an external surface (23) of the barrier; and
wiping the external surface of the barrier with the at least one wiper to remove water from the window portion; and further including:
providing the barrier with at least a first said electromagnetically transmissive window portion (21) and a second said electromagnetically transmissive window portion (22); **characterised by**
moving the barrier relative to the antenna and the at least one wiper between a first position in which signals may pass through the first window portion (21) of the barrier to the antenna, and a second position in which signals may pass through the second window portion (22) of the barrier to the antenna; and
wiping the external surface (23) of the barrier with the at least one wiper as the barrier moves relative to the antenna and the at least one wiper between the first and second positions.

14. A method according to claim 13, including:
arranging the antenna (1) to send signals (2), via the first and second window portions (21, 22) of the barrier (25), to a fixed target (4);
moving the barrier to the first position;
receiving, by the antenna, via the first window portion (21) of the barrier, a first signal returned from the target; and then
receiving, by the antenna, via the first window portion (21) of the barrier, a second signal returned from the target;
determining whether the second signal is attenuated relative to the first signal; and then,
responsive to determining that the second signal is attenuated relative to the first signal:
moving the barrier (25), relative to the antenna (1) and the at least one wiper (31, 32), from the first position to the second position; and then
commencing a detection cycle of the antenna, the detection cycle including at least receiving, by the antenna, via the second window portion (22) of the barrier, a third signal returned from the target; and then,
after completing the detection cycle, returning the barrier from the second position to the first position.

15. A method according to claim 14, including:
moving the barrier (25) downwardly from the first position to the second position, and upwardly from the second position to the first position.

## Patentansprüche

1. Radom (10) für eine Radarantenne (1), wobei das Radom in einer Gebrauchsposition der Antenne Folgendes beinhaltet:
eine Barriere (25), wobei die Barriere derart angeordnet ist, dass Signale (2) durch einen elektromagnetisch durchlässigen Fensterabschnitt (21, 22) der Barriere der Antenne geleitet werden können,
mindestens einen Wischer (31, 32), der in Kontakt mit einer Außenfläche (23) der Barriere angeordnet ist, und
ein Betätigungsmittel (8, 9) zum Abwischen der Außenfläche der Barriere mit dem mindestens einen Wischer, um Wasser vom Fensterabschnitt zu entfernen; wobei
die Barriere mindestens einen ersten elektromagnetisch durchlässigen Fensterabschnitt (21) und einen zweiten elektromagnetisch durchlässigen Fensterabschnitt (22) definiert; und **dadurch gekennzeichnet, dass**
das Betätigungsmittel (8, 9) angeordnet ist, die Barriere (25) relativ zur Antenne (1) und zu dem mindestens einen Wischer (31, 32) zwischen einer ersten Position, in der Signale durch den ersten Fensterabschnitt (21) der Barriere zur Antenne geleitet werden können, und einer zweiten Position, in der Signale durch den zweiten Fensterabschnitt (22) der Barriere zur Antenne geleitet werden können, zu bewegen;
der mindestens eine Wischer angeordnet ist, die Außenfläche der Barriere abzuwischen, wenn sich die Barriere relativ zur Antenne und zu dem mindestens einen Wischer zwischen der ersten und der zweiten Position bewegt.

2. Radom nach Anspruch 1, wobei das Radom angeordnet ist, den zweiten Fensterabschnitt (22) der Barriere in der ersten Position der Barriere zu umschließen.

3. Radom nach Anspruch 2, wobei das Radom angeordnet ist, den ersten Fensterabschnitt (21) der Barriere in der zweiten Position der Barriere zu umschließen.

4. Radom nach Anspruch 1, wobei mindestens eine Stütze (47) in Kontakt mit einer Innenfläche (24) der Barriere (25) gegenüber der Außenfläche (23) angeordnet ist und die Barriere zwischen dem mindestens einen Wischer (31, 32) und der mindestens einen Stütze (47) gleitbar ist.

5. Radom nach Anspruch 1, wobei ein erster Wischer (31) und ein zweiter Wischer (32) bereitgestellt sind, wobei der erste Wischer (31) angeordnet ist, Wasser vom ersten Fensterabschnitt (21) abzuwischen, wenn die Barriere aus der ersten Position in die zweite Position bewegt wird, wobei der zweite Wischer (32) angeordnet ist, Wasser vom zweiten Fensterabschnitt (22) abzuwischen, wenn die Barriere aus der zweiten Position in die erste Position bewegt wird.

6. Radom nach Anspruch 5, wobei der erste und der zweite Wischer (31, 32) gegenüberliegende obere und untere Seiten eines festen Rahmens definieren und die Barriere (25) ein Paneel umfasst, das relativ zum festen Rahmen nach oben und unten gleitbar ist.

7. Radom nach Anspruch 1, wobei das Betätigungsmittel (8, 9) ein Radarsteuersystem (8) beinhaltet und angeordnet ist, in Reaktion auf das Erfassen einer Dämpfung von Signalen, die von der Antenne via den ersten Fensterabschnitt (21) der Barriere empfangen werden, durch das Radarsteuersystem (8) die Barriere relativ zur Antenne und zu dem mindestens einen Wischer aus der ersten Position in die zweite Position zu bewegen.

8. Radom nach Anspruch 1, wobei das Betätigungsmittel (8, 9) ein Radarsteuersystem (8) beinhaltet, wobei das Radarsteuersystem (8) angeordnet ist, die Antenne (1) in einem Detektionszyklus zu betreiben; und das Betätigungsmittel (8, 9) angeordnet ist, die Barriere relativ zur Antenne und zu dem mindestens einen Wischer aus der ersten Position in die zweite Position zu bewegen, bevor der Detektionszyklus der Antenne beginnt, und die Barriere in Reaktion auf den Abschluss des Detektionszyklus aus der zweiten Position in die erste Position zurückzuführen;
wobei der Detektionszyklus mindestens das Empfangen eines Signals durch die Antenne via den zweiten Fensterabschnitt (22) der Barriere beinhaltet.

9. Radom nach Anspruch 1, wobei das Betätigungsmittel (8, 9) ein Radarsteuersystem (8) beinhaltet, wobei das Radarsteuersystem (8) angeordnet ist, die Antenne (1) in einem Detektionszyklus zu betreiben und eine Dämpfung von Signalen zu bestimmen, die von der Antenne via den ersten Fensterabschnitt (21) der Barriere in der ersten Position der Barriere vor Beginn des Detektionszyklus der Antenne empfangen werden; und das Betätigungsmittel (8, 9) zu Folgendem angeordnet ist:
in Reaktion auf das Bestimmen, dass ein jeweiliges späteres der Signale relativ zu einem früheren der Signale gedämpft ist,
Bewegen der Barriere relativ zur Antenne und zu dem mindestens einen Wischer vor Beginn des Detektionszyklus aus der ersten Position in die zweite Position und dann
Zurückführen der Barriere aus der zweiten Position in die erste Position in Reaktion auf den Abschluss des Detektionszyklus und
in Reaktion auf das Bestimmen, dass das jeweilige spätere der Signale relativ zum früheren der Signale nicht gedämpft ist, kein Bewegen der Barriere relativ zur Antenne und zu dem mindestens einen Wischer vor Beginn des Detektionszyklus aus der ersten Position in die zweite Position;
wobei der Detektionszyklus mindestens das Empfangen eines Signals durch die Antenne via die Barriere (25) beinhaltet.

10. Radom nach Anspruch 1, wobei die Barriere angeordnet ist, sich aus der ersten Position nach unten in die zweite Position und aus der zweiten Position nach oben in die erste Position zu bewegen.

11. Radom nach Anspruch 1, wobei die Barriere (25) ein Paneel umfasst, das in einem bewegbaren Rahmen (26) gestützt ist, und das Betätigungsmittel angeordnet ist, den Rahmen und das Paneel relativ zur Antenne und zu dem mindestens einen Wischer zusammen zwischen der ersten und der zweiten Position zu bewegen.

12. Radom nach Anspruch 1, wobei eine Zwischenregion (28) der Barriere zwischen dem ersten (21) und dem zweiten (22) Fensterabschnitt elektromagnetisch durchlässig ist und die Barriere derart angeordnet ist, dass Signale durch die Barriere zur Antenne geleitet werden können, wenn sich die Barriere in einer Zwischenposition zwischen der ersten und der zweiten Position befindet.

13. Verfahren zum Abwischen von Wasser von einem Radom (10) für eine Radarantenne (1), das Folgendes beinhaltet:
Anordnen einer Barriere (25) des Radoms, derart, dass Signale (2) durch einen elektromagnetisch durchlässigen Fensterabschnitt (21, 22) der Barriere der Antenne geleitet werden können;
Anordnen von mindestens einem Wischer (31, 32) in Kontakt mit einer Außenfläche (23) der Barriere und
Abwischen der Außenfläche der Barriere mit dem mindestens einen Wischer, um Wasser vom Fensterabschnitt zu entfernen; und ferner Folgendes beinhaltet:
Bereitstellen der Barriere mit mindestens einem ersten elektromagnetisch durchlässigen Fensterabschnitt (21) und einem zweiten elektromagnetisch durchlässigen Fensterabschnitt (22); **gekennzeichnet durch**
Bewegen der Barriere relativ zur Antenne und zu dem mindestens einen Wischer zwischen einer ersten Position, in der Signale durch den ersten Fensterabschnitt (21) der Barriere zur Antenne geleitet werden können, und einer zweiten Position, in der Signale durch den zweiten Fensterabschnitt (22) der Barriere zur Antenne geleitet werden können; und
Abwischen der Außenfläche (23) der Barriere mit dem mindestens einen Wischer, wenn sich die Barriere relativ zur Antenne und zu dem mindestens einen Wischer zwischen der ersten und der zweiten Position bewegt.

14. Verfahren nach Anspruch 13, das Folgendes beinhaltet:
Anordnen der Antenne (1) zum Senden von Signalen (2) via den ersten und den zweiten Fensterabschnitt (21, 22) der Barriere (25) an ein festes Ziel (4);
Bewegen der Barriere in die erste Position;
Empfangen eines ersten Signals, das vom Ziel zurückgegeben wird, durch die Antenne via den ersten Fensterabschnitt (21) der Barriere und dann
Empfangen eines zweiten Signals, das vom Ziel zurückgegeben wird, durch die Antenne via den ersten Fensterabschnitt (21) der Barriere;
Bestimmen, ob das zweite Signal relativ zum ersten Signal gedämpft ist; und dann
in Reaktion auf das Bestimmen, dass das zweite Signal relativ zum ersten Signal gedämpft ist:
Bewegen der Barriere (25) relativ zur Antenne (1) und zu dem mindestens einen Wischer (31, 32) aus der ersten Position in die zweite Position und dann
Beginnen eines Detektionszyklus der Antenne, wobei der Detektionszyklus mindestens das Empfangen eines dritten Signals, das vom Ziel zurückgegeben wird, durch die Antenne via den zweiten Fensterabschnitt (22) der Barriere beinhaltet; und dann
nach Abschluss des Detektionszyklus Zurückführen der Barriere aus der zweiten Position in die erste Position.

15. Verfahren nach Anspruch 14, das Folgendes beinhaltet:
Bewegen der Barriere (25) aus der ersten Position nach unten in die zweite Position und aus der zweiten Position nach oben in die erste Position.

## Revendications

1. Radôme (10) pour une antenne radar (1), le radôme comportant, dans une position d'utilisation de l'antenne :
une barrière (25), la barrière étant agencée de sorte que des signaux (2) puissent passer à travers des parties de fenêtre à transmission électromagnétique (21, 22) de la barrière à l'antenne,
un ou des racleur(s) (31, 32) agencé (s) en contact avec une surface externe (23) de la barrière, et
un moyen d'actionnement (8, 9) pour essuyer la surface externe de la barrière avec le (s) racleur(s) afin d'éliminer l'eau des parties de fenêtre ; dans lequel
la barrière définit au moins une première desdites parties de fenêtre à transmission électromagnétique (21) et une deuxième desdites parties de fenêtre à transmission électromagnétique (22) ; et **caractérisé en ce que**
le moyen d'actionnement (8, 9) est agencé pour déplacer la barrière (25) par rapport à l'antenne (1) et au(x) racleur(s) (31, 32), entre une première position dans laquelle des signaux peuvent passer à travers la première partie de fenêtre (21) de la barrière à l'antenne, et une deuxième position dans laquelle des signaux peuvent passer à travers la deuxième partie de fenêtre (22) de la barrière à l'antenne ;
le(s) racleur(s) étant agencé(s) pour essuyer la surface externe de la barrière à mesure que la barrière se déplace par rapport à l'antenne et au(x) racleur(s) entre les première et deuxième positions.

2. Radôme selon la revendication 1, dans lequel le radôme est agencé pour enfermer la deuxième partie de fenêtre (22) de la barrière dans la première position de la barrière.

3. Radôme selon la revendication 2, dans lequel le radôme est agencé pour enfermer la première partie de fenêtre (21) de la barrière dans la deuxième position de la barrière.

4. Radôme selon la revendication 1, dans lequel au moins un support (47) est agencé en contact avec une surface interne (24) de la barrière (25) opposée à la surface externe (23), et la barrière peut coulisser entre le(s) racleur(s) (31, 32) et l'au moins un support (47).

5. Radôme selon la revendication 1, dans lequel ledit premier racleur (31) et ledit deuxième racleur (32) sont prévus, le premier racleur (31) étant agencé pour essuyer l'eau de la première partie de fenêtre (21) lorsque la barrière est déplacée de la première position à la deuxième position, le deuxième racleur (32) étant agencé pour essuyer l'eau de la deuxième partie de fenêtre (22) lorsque la barrière est déplacée de la deuxième position à la première position.

6. Radôme selon la revendication 5, dans lequel les premier et deuxième racleurs (31, 32) définissent des côtés opposés, supérieur et inférieur d'un cadre fixe, et la barrière (25) comprend un panneau qui peut coulisser vers le haut et vers le bas par rapport au cadre fixe.

7. Radôme selon la revendication 1, dans lequel le moyen d'actionnement (8, 9) comporte un système de commande radar (8), et est agencé pour déplacer la barrière par rapport à l'antenne et au(x) racleur(s) de la première position à la deuxième position en réponse à la détection, par le système de commande radar (8), d'une atténuation des signaux reçus par l'antenne via la première partie de fenêtre (21) de la barrière.

8. Radôme selon la revendication 1, dans lequel le moyen d'actionnement (8, 9) comporte un système de commande radar (8), le système de commande radar (8) étant agencé pour faire fonctionner l'antenne (1) dans un cycle de détection ; et le moyen d'actionnement (8, 9) est agencé pour déplacer la barrière par rapport à l'antenne et au(x) racleur(s) de la première position à la deuxième position avant le commencement du cycle de détection de l'antenne, et pour ramener la barrière de la deuxième position à la première position en réponse à l'achèvement du cycle de détection ;
le cycle de détection comportant au moins la réception d'un signal par l'antenne via la deuxième partie de fenêtre (22) de la barrière.

9. Radôme selon la revendication 1, dans lequel le moyen d'actionnement (8, 9) comporte un système de commande radar (8), le système de commande radar (8) étant agencé pour faire fonctionner l'antenne (1) dans un cycle de détection, et pour déterminer une atténuation de signaux reçus par l'antenne via la première partie de fenêtre (21) de la barrière dans la première position de la barrière avant de commencer le cycle de détection de l'antenne ; et le moyen d'actionnement (8, 9) est agencé :
en réponse à la détermination du fait qu'un signal respectif ultérieur des signaux est atténué par rapport à un signal antérieur des signaux,
pour déplacer la barrière par rapport à l'antenne et au(x) racleur(s) de la première position à la deuxième position avant le commencement du cycle de détection, et ensuite
pour ramener la barrière de la deuxième position à la première position en réponse à l'achèvement du cycle de détection ; et,
en réponse à la détermination du fait que le signal respectif ultérieur des signaux n'est pas atténué par rapport au signal antérieur des signaux, pour ne pas déplacer la barrière par rapport à l'antenne et au(x) racleur(s) de la première position à la deuxième position avant le commencement du cycle de détection ;
le cycle de détection comportant au moins la réception d'un signal par l'antenne via la barrière (25).

10. Radôme selon la revendication 1, dans lequel la barrière est agencée pour se déplacer vers le bas de la première position à la deuxième position, et vers le haut de la deuxième position à la première position.

11. Radôme selon la revendication 1, dans lequel la barrière (25) comprend un panneau supporté dans un cadre mobile (26), et le moyen d'actionnement est agencé pour déplacer le cadre et le panneau ensemble par rapport à l'antenne et au(x) racleur(s) entre les première et deuxième positions.

12. Radôme selon la revendication 1, dans lequel une région intermédiaire (28) de la barrière entre les première (21) et deuxième (22) parties fenêtre est électromagnétiquement transmissive, et la barrière est agencée de sorte que les signaux puissent passer à travers la barrière à l'antenne lorsque la barrière est dans toute position intermédiaire entre les première et deuxième positions.

13. Procédé d'essuyage de l'eau d'un radôme (10) pour une antenne radar (1), comportant les étapes consistant à :
agencer une barrière (25) du radôme de sorte que des signaux (2) puissent passer à travers des parties de fenêtre à transmission électromagnétique (21, 22) de la barrière à l'antenne ;
agencer un ou des racleur(s) (31, 32) en contact avec une surface externe (23) de la barrière ; et
essuyer la surface externe de la barrière avec le (s) racleur(s) afin d'éliminer l'eau des parties de fenêtre ; et comportant en outre les étapes consistant à :
munir la barrière au moins d'une première desdites parties de fenêtre à transmission électromagnétique (21) et d'une deuxième desdites parties de fenêtre à transmission électromagnétique (22) ; **caractérisé par**
le déplacement de la barrière par rapport à l'antenne et au(x) racleur(s) entre une première position dans laquelle des signaux peuvent passer à travers la première partie de fenêtre (21) de la barrière à l'antenne, et une deuxième position dans laquelle des signaux peuvent passer à travers la deuxième partie de fenêtre (22) de la barrière à l'antenne ; et
l'essuyage de la surface externe (23) de la barrière avec le(s) racleur(s) à mesure que la barrière se déplace par rapport à l'antenne et au(x) racleur(s) entre les première et deuxième positions.

14. Procédé selon la revendication 13, comportant les étapes consistant à :
agencer de l'antenne (1) pour envoyer des signaux (2), via les première et deuxième parties de fenêtre (21, 22) de la barrière (25), à une cible fixe (4) ;
déplacer la barrière vers la première position ;
recevoir, par l'antenne, via la première partie de fenêtre (21) de la barrière, un premier signal renvoyé par la cible ; et ensuite
recevoir, par l'antenne, via la première partie de fenêtre (21) de la barrière, un deuxième signal renvoyé par la cible ;
déterminer si le deuxième signal est atténué par rapport au premier signal ; et ensuite,
en réponse à la détermination du fait que le deuxième signal est atténué par rapport au premier signal :
déplacer la barrière (25), par rapport à l'antenne (1) et au(x) racleur(s) (31, 32), de la première position à la deuxième position ; et ensuite
commencer un cycle de détection de l'antenne, le cycle de détection comportant au moins la réception, par l'antenne, via la deuxième partie de fenêtre (22) de la barrière, d'un troisième signal renvoyé par la cible ; et ensuite,
après l'achèvement du cycle de détection, ramener la barrière de la deuxième position à la première position.

15. Procédé selon la revendication 14, comportant :
le déplacement de la barrière (25) vers le bas de la première position à la deuxième position, et vers le haut de la deuxième position à la première position.
